# EUROPEAN PATENT APPLICATION

(11) **EP 3 270 214 A1**
(43) Date of publication of application: **17.01.2018**
(21) Application number: 16894502.0
(22) Date of filing: 16.09.2016
(51) Int. Cl.: G02F 1/01, G02B 6/12, G02B 6/126, G02B 6/30, G02B 6/32

(54) **OPTICAL MODULATION DEVICE**

(30) Priority: 16.03.2016 JP 2016051986
(71) Applicant: Sumitomo Osaka Cement Co., Ltd., Tokyo 102-8465 (JP)
(72) Inventor: HARA Tokutaka, Tokyo 102-8465 (JP); SHIMIZU Ryo, Tokyo 102-8465 (JP)
(74) Representative: Weickmann & Weickmann PartmbB
(86) International application number: PCT/JP2016/077462
(87) International publication number: WO 2017/158885

(57) **Abstract**

To realize additional improvement and stabilization of optical characteristics, miniaturization, and low cost in an integration-type optical modulation device that includes a plurality of optical modulation elements, combines two modulated and linearly polarized light beams emitted from each of the modulation elements into one light beam. The optical modulation device includes two optical modulation elements (120a and 120b) each of which outputs two linearly polarized light beams; and four lenses (140a and the like) which respectively receive four linearly polarized light beams output from the two optical modulation elements. A distance between the two linearly polarized light beams which are output from one of the optical modulation elements and respectively pass through two of the lenses, and the two linearly polarized light beams which are output from the other optical modulation element and respectively pass through two of the lenses is set to gradually increase along a propagation direction.

## Description

### Technical Field

Certain embodiments of the present invention relate to an optical modulation device that modulates light beams incident from one optical fiber by an optical modulation element and emits the resultant modulated light beams from another optical fiber, and particularly to, an integration-type optical modulation device that includes a plurality of optical modulation elements which are formed on individual substrates, or are formed on one substrate side by side, and performs polarization beam combining of two linearly polarized light beams, which are modulated and are output from the plurality of optical modulation elements, to output the resultant combined light beam from one optical fiber.

### Background Art

In a high-frequency and large-capacity optical fiber communication system, optical modulators including a waveguide-type optical modulation element have been widely used. With regard to the optical modulators, an optical modulation element, in which LiNbO₃ (hereinafter, also referred to as "LN") having an electro-optic effect is used for a substrate, is widely used in a high-frequency and large-capacity optical fiber communication system when considering that it is possible to realize wide-band optical modulation characteristics with a low optical loss.

In the optical modulation element using the LN, for example, a Mach-Zehnder type optical waveguide is formed on the LN substrate, and when a high-frequency signal is applied to an electrode formed on the optical waveguide, a modulated signal light beam (hereinafter, referred to as "modulated light beam") corresponding to the high-frequency signal is output. In addition, in a case of using the optical modulation element in an optical transmission device, an optical modulation device, which includes a casing in which the optical modulation element is accommodated, an incident optical fiber through which a light beam from a light source is incident to the optical modulation element, and an emission optical fiber that guides the light beam output from the optical modulation element to the outside of the casing, is used.

With regard to a modulation mode in the optical fiber communication system, a transmission format in which polarization multiplexing is introduced becomes a mainstream from the recent trend of an increase in transmission capacity. Examples of the transmission formation include dual polarization-quadrature phase shift keying (DP-QPSK), dual polarization-quadrature amplitude modulation (DP-QAM), and the like in which two linearly polarized light beams polarized in directions perpendicular to each other are subjected to phase shift keying or quadrature amplitude modulation and are transmitted by one optical fiber.

In the optical modulation device that performs the DP-QPSK modulation or the DP-QAM modulation, a linearly polarized light beam output from one light source is incident to the optical modulation element. In the optical modulation element, the incident linearly polarized light beam is branched into two light beams, and the two light beams are modulated by using two independent high-frequency signals. The two linearly polarized light beams, which are modulated, are combined into one light beam and the resultant light beam is output in a state of being coupled to one optical fiber.

On the other hand, for example, consideration is given to the following wavelength multiplexing system so as to further increase transmission capacity of the optical transmission system. Specifically, the DP-QPSK modulation or the DP-QAM modulation is performed with respect to a plurality of light beams having wavelengths different from each other, and the plurality of modulated light beams having wavelengths different from each other are collected as one light beam by using a wavelength combiner. The resultant light beam is transmitted by one optical fiber. In an optical transmission device in which a plurality of light beams are respectively modulated and are transmitted by one optical fiber, from the viewpoint of miniaturization of the device and the like, there is a demand for an integration-type optical modulation device that includes a plurality of optical modulation elements (or an integration-type optical modulation element in which a plurality of optical modulation elements are formed on one LN substrate) in one casing, and can output a plurality of modulated light beams by respectively modulating a plurality of input light beams instead of using a plurality of optical modulation devices which respectively modulate one input light beam and output one modulated light beam.

In this case, it is necessary to extend a distance between two linearly polarized light beams emitted from one optical modulation element and two linearly polarized light beams emitted from another optical modulation element from the necessity for securing a space for optical components such as a polarization beam combiner that combines two light beams (linearly polarized light beams) emitted from each of the plurality of optical modulation elements, and a lens that couples light beams emitted from the polarization beam combiner to an optical fiber.

As the integration-type optical modulation device, in the related art, there is known the following integration-type optical modulation device including two optical modulation elements. After a distance between two linearly polarized light beams output from one optical modulation element and two linearly polarized light beams output from the other optical modulation element is extended by using two optical path shift prisms (prisms for parallel movement of a light path), the two linearly polarized light beams output from each of the optical modulation element are combined into one light beam by a polarization beam combining prism and the like, and the resultant light beam is output to the outside of a casing by one optical fiber (Patent Literature No. 1) .

In the optical modulation device, distances from the two optical modulation elements to the two optical path shift prisms are made to be different from each other. According to this, damage of an optical component, which occurs when the two optical path shift prisms come into contact with each other and the like, is prevented.

However, in a case of constituting the optical modulation device, it is required to significantly reduce the number of optical components which are inserted into an optical path from the viewpoint of an improvement in optical coupling efficiency between the optical modulation element and an emission optical fiber, from the viewpoint of stabilization of a temperature variation or a variation with the passage of time in the optical coupling efficiency, and from the viewpoint of a reduction in a device size or a device cost.

That is, in the integration-type optical modulation device of the related art, there is a room for improvement from the viewpoints of an improvement and stabilization of optical characteristics, miniaturization, low cost, and the like.

### Citation List

### Patent Literature

[Patent Literature No. 1] Japanese Laid-open Patent Publication No. 2015-172630

### Summary of Invention

### Technical Problem

From the background, in an integration-type optical modulation device that includes a plurality of optical modulation elements which are respectively formed on individual substrates or are arranged on one substrate, combines two modulated and linearly polarized light beams output from each of the plurality of optical modulation elements into one light beam, and outputs the resultant light beam from one optical fiber, it is required to realize a configuration capable of realizing a further improvement from the viewpoints of an improvement and stabilization of optical characteristics, miniaturization, low cost, and the like.

### Solution to Problem

According to an aspect of the invention, there is provided an optical modulation device including: two optical modulation elements each of which outputs two linearly polarized light beams; and four lenses which respectively receive four linearly polarized light beams output from the two optical modulation elements. A distance between the two linearly polarized light beams which are output from one of the optical modulation elements and respectively pass through two of the lenses, and the two linearly polarized light beams which are output from the other optical modulation element and respectively pass through two of the lenses is set to gradually increase along a propagation direction.

According to another aspect of the invention, at least optical axes of the two lenses, which respectively receive the two linearly polarized light beams from one of the optical modulation elements, may be displaced by a predetermined distance with respect to optical axes of said two linearly polarized light beams, and thereby the distance between the two linearly polarized light beams which are output from the one optical modulation element and respectively pass through two of the lenses, and the two linearly polarized light beams which are output from the other optical modulation element and respectively pass through two of the lenses may be set to gradually increase along the propagation direction.

According to still another aspect of the invention, each of the optical modulation elements may comprise an optical waveguide that is formed on a substrate, and the optical waveguide, which emits the two linearly polarized light beams, of at least one of the optical modulation elements may be formed at a predetermined angle with respect to a normal line of an end surface of the substrate so that the distance between the two linearly polarized light beams which are output from the one optical modulation element and are emitted from the end surface of the substrate, and the two linearly polarized light beams which are output from the other optical modulation element and are emitted from the end surface of the substrate gradually increase along the propagation direction.

According to still another aspect of the invention, the two optical modulation elements may be optical modulation elements which perform phase shift keying or quadrature amplitude modulation.

According to still another aspect of the invention, the two optical modulation elements may be respectively formed on different substrates, or are formed on the same substrate side by side.

According to still another aspect of the invention, the four lenses may comprise as a microlens array that is integrally formed.

According to still another aspect of the invention, the optical modulation device may further include two polarization beam combiners which, respectively, combine the two linearly polarized light beams which are output from the one optical modulation element and respectively pass through two of the lenses into one light beam, and combine the two linearly polarized light beams which are output from the other optical modulation element and respectively pass through two of the lenses into one light beam; and two coupling lenses which respectively couple the two light beams respectively output from the two polarization beam combiner into the optical fiber.

According to still another aspect of the invention, each of the polarization beam combiners may comprise a half-wavelength plate, and a polarization beam combining prism.

### Brief Description of Drawings

FIG. 1 is a view illustrating a configuration of an optical modulation device according to a first embodiment of the invention.
FIG. 2 is a partially detailed view of the periphery of a substrate end surface on an optical emission side of an optical modulator in the optical modulation device illustrated in FIG. 1.
FIG. 3 is a view illustrating a configuration of an optical modulation device according to a third embodiment of the invention.
FIG. 4 is a partially detailed view of the periphery of a substrate end surface on an optical emission side of an optical modulator in the optical modulation device illustrated in FIG. 3.

### Description of Embodiments

Hereinafter, embodiments of the invention will be described with reference to the accompanying drawings.

### [First Embodiment]

First, description will be given of an optical modulation device according to a first embodiment of the invention.

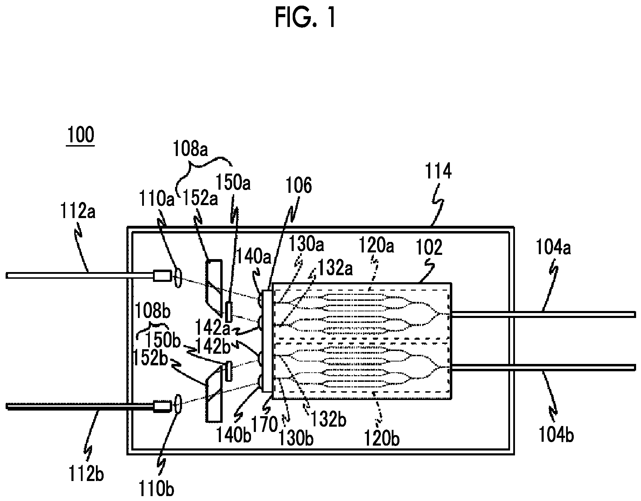

FIG. 1 is a view illustrating a configuration of the optical modulation device according to this embodiment. This optical modulation device 100 includes an optical modulator 102, incident optical fibers 104a and 104b through which light beams are incident to the optical modulator 102 from a light source (not illustrated), a microlens array 106, polarization beam combiners 108a and 108b, coupling lenses 110a and 110b, emission optical fibers 112a and 112b, and a casing 114.

For example, the incident optical fibers 104a and 104b allow linearly polarized light beams, which are transmitted from two light sources (not illustrated) and have wavelengths different from each other, to be incident to the optical modulator 102.

The optical modulator 102 includes two optical modulation elements 120a and 120b which are formed on one sheet of LN substrate and comprise an optical waveguide. For example, the optical modulation elements 120a and 120b are optical modulation elements which perform DP-QPSK modulation or DP-QAM modulation.

The optical modulation element 120a branches a linearly polarized light beam, which is incident from the incident optical fiber 104a, into two light beams, and outputs two linearly polarized light beams, which are modulated by electrical signals different from each other, from emission waveguides 130a and 132a. Similarly, the optical modulation element 120b branches a linearly polarized light beam, which is incident from the incident optical fiber 104b, into two light beams, and outputs two linearly polarized light beams, which are modulated by signals different from each other, from emission waveguides 130b and 132b.

The microlens array 106, which comprise four microlenses 140a, 142a, 140b, and 142b, is disposed on a substrate end surface 170 of the optical modulator 102 on an optical emission side (substrate end surface on a side in which the emission waveguides 130a, 132a, 130b, and 132b are formed (that is, the left side in the drawing)).

Light beams, which are output from the emission waveguides 130a and 132a of the optical modulation element 120a, are collimated, for example, by the microlenses 140a and 142a, and are incident to the polarization beam combiner 108a. Similarly, light beams, which are output from the emission waveguides 130b and 132b of the optical modulation element 120b, are collimated, for example, by the microlenses 140b and 142b, and are incident to the polarization beam combiner 108b.

For example, each of the polarization beam combiners 108a and 108b comprises each of half-wavelength plates 150a and 150b, and each of polarization beam combining prisms 152a and 152b. Each of the polarization beam combiners 108a and 108b combines two linearly polarized light beams which are emitted from each of the optical modulation elements 120a and 120b and are polarized in the same direction into one light beam.

That is, the polarization beam combiner 108a combines two linearly polarized light beams, which are output from the emission waveguides 130a and 132a of the optical modulation element 120a, and are collimated by the microlenses 140a and 142a, into one light beam. Similarly, the polarization beam combiner 108b combines two linearly polarized light beams, which are output from the emission waveguides 130b and 132b of the optical modulation element 120b, and are collimated by the microlenses 140b and 142b, into one light beam.

The light beams, which are respectively output from the polarization beam combiners 108a and 108b, are respectively condensed by the coupling lenses 110a and 110b, and the resultant condensed light beams respectively enter the emission optical fibers 112a and 112b and are guided to the outside of the casing 114.

Particularly, in the optical modulation device 100 according to this embodiment, optical axes of the microlenses 140a and 142a, which respectively collimate the two linearly polarized light beams output from the emission waveguides 130a and 132a of the optical modulation element 120a, are displaced by a predetermined distance with respect to optical axes (that is approximately the same as the central axes of the emission waveguides 130a and 132a in this embodiment) of the linearly polarized light beams which are respectively incident to the microlenses 140a and 142a toward a direction perpendicular to the optical axes. In addition, similarly, optical axes of the microlenses 140b and 142b, which respectively collimate the two linearly polarized light beams output from the emission waveguides 130b and 132b of the optical modulation element 120b, are displaced by a predetermined distance with respect to optical axes (that is approximately the same as the central axes of the emission waveguides 130b and 132b in this embodiment) of the linearly polarized light beams which are respectively incident to the microlenses 140b and 142b toward a direction perpendicular to the optical axes.

In addition, a distance between the two linearly polarized light beams which are output from the optical modulation element 120a and respectively pass through the microlenses 140a and 142a, and the two linearly polarized light beams which are output from the optical modulation element 120b and pass through the microlenses 140b and 142b is set to gradually increase along an optical propagation direction (that is, as the light beams propagate) due to the displacement by the predetermined distance with respect to the optical axes of the of the microlenses 140a and 142a and the displacement by the predetermined distance with respect to the optical axes of the microlenses 140b and 142b.

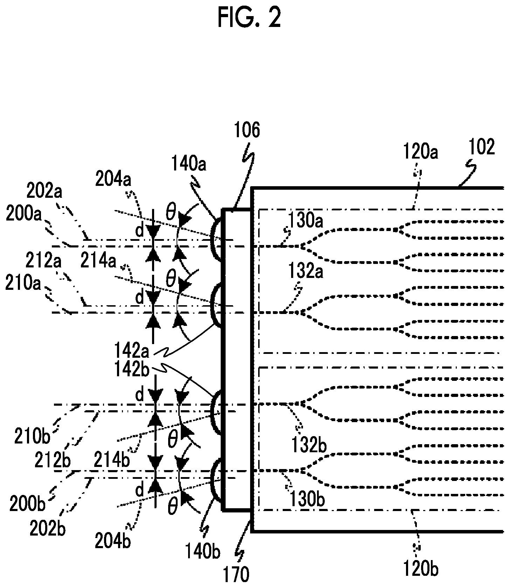

FIG. 2 is a partially detailed view of the periphery of the substrate end surface 170 of the optical modulator 102 on the optical emission side in FIG. 1. An optical axis 202a of the microlens 140a of the microlens array 106 is displaced toward an upper side in the drawing by a predetermined distance d with respect to an optical axis (that is approximately the same as the central axis of the emission waveguide 130a in this embodiment) 200a of a linearly polarized light beam that is emitted from the emission waveguide 130a and is incident to the microlens 140a. According to this, the linearly polarized light beam, which is emitted from the microlens 140a, is emitted along an optical axis 204a toward an upper-left side in the drawing by a predetermined angle θ with respect to the central line 200a of the emission waveguide 130a. Similarly, optical axis 212a of the microlens 142a is displaced toward an upper side in the drawing by a predetermined distance d with respect to an optical axis (that is approximately the same as the central axis of the emission waveguide 132a in this embodiment) 210a of a linearly polarized light beam that is emitted from the emission waveguide 132a and is incident to the microlens 142a. According to this, the linearly polarized light beam, which is emitted from the microlens 142a, is emitted along an optical axis 214a toward an upper-left side in the drawing by a predetermined angle θ with respect to the central line 210a of the emission waveguide 132a.

In contrast, optical axis 202b of the microlens 140b of the microlens array 106 is displaced toward a lower side in the drawing by a predetermined distance d with respect to an optical axis (that is approximately the same as the central axis of the emission waveguide 130b in this embodiment) 200b of a linearly polarized light beam that is emitted from the emission waveguide 130b and is incident to the microlens 140b. According to this, the linearly polarized light beam, which is emitted from the microlens 140b, is emitted along an optical axis 204b toward a lower-left side in the drawing by a predetermined angle θ with respect to the central line 200b of the emission waveguide 130b. Similarly, optical axis 212b of the microlens 142b is displaced toward a lower side in the drawing by a predetermined distance d with respect to an optical axis (that is approximately the same as the central axis of the emission waveguide 132b in this embodiment) 210b of a linearly polarized light beam that is emitted from the emission waveguide 132b and is incident to the microlens 142b. According to this, the linearly polarized light beam, which is emitted from the microlens 142b, is also emitted along an optical axis 214b toward a lower-left side in the drawing by a predetermined angle θ with respect to the central line 210b of the emission waveguide 132b.

According to this, a distance between the two linearly polarized light beams which are emitted from the emission waveguides 130a and 132a and pass through the microlenses 140a and 142a, and the two linearly polarized light beams which are emitted from the emission waveguides 130b and 132b and pass through the microlenses 140b and 142b is set to gradually increase along the optical propagation direction (that is, as a light beam propagates) while making an angle 2θ.

That is, in the optical modulation device 100 having the above-described configuration, emission light beams, which are respectively emitted from the two optical modulation elements 120a and 120b, are emitted in directions to be gradually distant from each other as the emission light beams propagate. Accordingly, a distance between the emission light beams is extended without using an optical path shift prism of the related art, and thus it is possible to secure a space in which the polarization beam combiners 108a and 108b and the coupling lenses 110a and 110b are disposed. According to this, the number of optical components, which are used in a region from the optical modulator 102 to the emission optical fibers 112a and 112b, is reduced. As a result, it is possible to improve optical characteristics such as optical coupling efficiency from the optical modulation elements 120a and 120b to the emission optical fibers 112a and 112b, and it is possible to realize stabilization of the optical characteristics. In addition, it is possible to realize the optical modulation device 100 in a small size and at a low cost.

As described above, in this embodiment, the linearly polarized light beams which are respectively emitted from the optical modulation elements 120a and 120b two by two, are set to be emitted at an inclination angle θ with respect to the central axes of the emission waveguides 130a and 132a, and the central axes of the emission waveguides 130b and 132b in directions different from each other. However, in this embodiment, it is possible to use another configuration without limitation thereto as long as a distance between the linearly polarized light beams, which are respectively emitted from the optical modulation elements 120a and 120b, is set to gradually increase along a propagation direction. For example, the optical modulation device 100 may be constructed as follows. With regard to only the optical modulation element 120a, the linearly polarized light beams, which are emitted from the optical modulation element 120a, may be set to be emitted at the inclination angle θ with respect to the central axes of the emission waveguides 130a and 132a in a direction to be distant from the emission waveguides 130b and 132b.

### [Second Embodiment]

Next, description will be given of an optical modulation device according to a second embodiment of the invention.

In the optical modulation device of this embodiment, emission waveguides of two optical modulation elements formed on a substrate are formed to have a predetermined angle in directions opposite to each other with respect to a normal line of an end surface of the substrate on an optical emission side. In addition, a linearly polarized light beam from one of the optical modulation elements and a linearly polarized light beam from the other optical modulation element are emitted from the substrate end surface toward directions between which a distance gradually increases along an optical propagation direction.

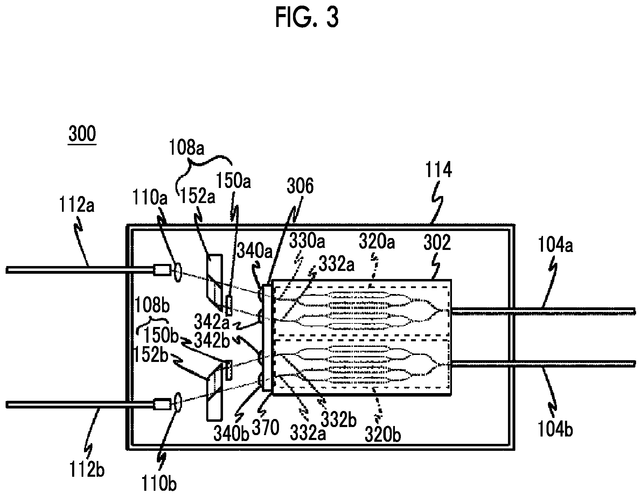

FIG. 3 is a view illustrating a configuration of an optical modulation device according to this embodiment. Furthermore, in FIG. 3, the same reference numeral as in FIG. 1 will be given to the same constituent element as in the optical modulation device 100 according to the first embodiment as illustrated in FIG. 1, and description for the optical modulation device 100 will be cited.

The optical modulation device 300 has the same configuration as in the optical modulation device 100 according to the first embodiment except that an optical modulator 302 and a microlens array 306 are provided instead of the optical modulator 102 and the microlens array 106.

The optical modulator 302 includes two optical modulation elements 320a and 320b which are formed on one sheet of LN substrate and comprise an optical waveguide. The optical modulation elements 320a and 320b are optical modulation elements which perform DP-QPSK modulation or DP-QAM modulation.

The optical modulation element 320a branches a linearly polarized light beam, which is incident from the incident optical fiber 104a, into two light beams, and outputs two linearly polarized light beams, which are modulated by electrical signals different from each other, from emission waveguides 330a and 332a. Similarly, the optical modulation element 320b branches a linearly polarized light beam, which is incident from the incident optical fiber 104b, into two light beams, and outputs two linearly polarized light beams, which are modulated by signals different from each other, from emission waveguides 330b and 332b.

Particularly, in the optical modulator 302 that is used in the optical modulation device 300 according to this embodiment, the emission waveguides 330a and 332a of the optical modulation element 320a, and the emission waveguides 330b and 332b of the optical modulation element 320b are formed to be inclined by a predetermined angle with respect to a normal line of the substrate end surface 370 in directions different from each other.

In addition, for example, light beams, which are output from the emission waveguides 330a and 332a of the optical modulation element 320a, are collimated by microlenses 340a and 342a which constitute the microlens array 306, and are incident to the polarization beam combiner 108a. Similarly, for example, light beams, which are output from the emission waveguides 330b and 332b of the optical modulation element 320b, are collimated by microlenses 340b and 342b which constitute the microlens array 306, and are incident to the polarization beam combiner 108b.

Here, the four microlenses 340a, 342a, 340b, and 342b, which constitute the microlens array 306, are configured to convert emission light beams emitted from the emission waveguides 330a, 332a, 330b, and 332b into collimated light beams which propagate along emission directions of the emission light beams.

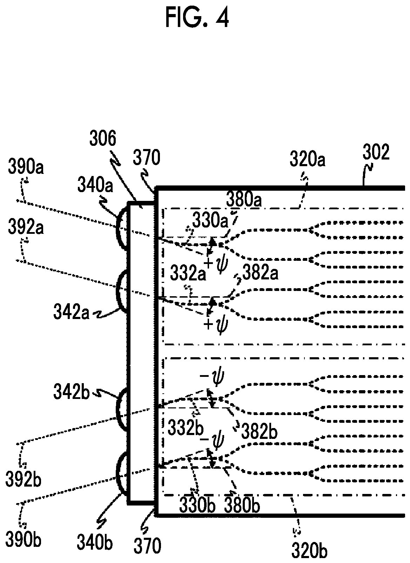

FIG. 4 is a partially detailed view of the periphery of the substrate end surface 370 of the optical modulator 302 illustrated in FIG. 3. The emission waveguide 330a of the optical modulation element 320a is formed to be inclined with respect to a normal line 380a of the substrate end surface 370 by a predetermined angle +ψ (a rotation angle in a clockwise direction is set as "positive"), and a light beam emitted from the emission waveguide 330a propagates along an optical axis 390a that faces an upper-left direction in the drawing. Similarly, the emission waveguide 332a of the optical modulation element 320a is formed to be inclined with respect to a normal line 382a of the substrate end surface 370 by a predetermined angle +ψ, and a light beam emitted from the emission waveguide 332a propagates along an optical axis 392a that faces an upper-left direction in the drawing.

In contrast, the emission waveguide 330b of the optical modulation element 320b is formed to be inclined with respect to a normal line 380b of the substrate end surface 370 by a predetermined angle -ψ, and a light beam emitted from the emission waveguide 330b propagates along an optical axis 390b that faces a lower-left direction in the drawing. Similarly, the emission waveguide 332b of the optical modulation element 320b is formed to be inclined with respect to a normal line 382b of the substrate end surface 370 by a predetermined angle -ψ, and a light beam emitted from the emission waveguide 332b propagates along an optical axis 392b that faces a lower-left direction in the drawing.

According to this, a distance between the two linearly polarized light beams emitted from the emission waveguides 330a and 332a, and the two linearly polarized light beams emitted from the emission waveguides 330b and 332b is set to gradually increase along an optical propagation direction.

That is, in the optical modulation device 300 having the above-described configuration, as is the case with the optical modulation device 100 according to the first embodiment, emission light beams, which are respectively emitted from the two optical modulation elements 320a and 320b, are emitted in directions to be gradually distant from each other as the emission light beams propagate. AOccordingly, in the optical modulation device 300, a distance between the emission light beams is extended without using an optical path shift prism of the related art, and thus it is possible to secure a space in which the polarization beam combiners 108a and 108b and the lenses 160a and 110b are disposed. According to this, the number of optical components, which are used in a region from the optical modulator 302 to the emission optical fibers 112a and 112b, is reduced. As a result, it is possible to improve optical characteristics such as optical coupling efficiency from the optical modulation elements 320a and 320b to the emission optical fibers 112a and 112b, and it is possible to realize stabilization of the optical characteristics. In addition, it is possible to realize the optical modulation device 100 in a small size and at a low cost.

In addition, in the optical modulation device 300 of this embodiment, particularly, the emission waveguides 330a, 332a, 330b, and 332b are inclined with respect to the normal direction of the substrate end surface 370. According to this, light beams (reflected and returning light beams), which are reflected from the substrate end surface 370 after propagation along the emission waveguides 330a, 332a, 330b, and 332b, and propagate through the inside of the emission waveguides 330a, 332a, 330b, and 332b in an opposite direction, are suppressed, and thus it is possible to obtain a satisfactory optical modulation operation.

As described above, in this embodiment, in the optical modulation elements 320a and 320b, the emission waveguides 330a and 332a, and the emission waveguides 330b and 332b are formed to make a predetermined angle in opposite directions with respect to the normal line of the substrate end surface on which the optical modulation elements 320a and 320b are formed. However, in another embodiment, it is possible to use another configuration without limitation thereto as long as a distance between the emission light beams, which are respectively emitted from the optical modulation elements 320a and 320b, is set to gradually increase along a propagation direction (as the light beams propagate). For example, only the emission waveguides 330a and 332a of the optical modulation element 320a on one side may be formed to be inclined with respect to the normal line of the substrate end surface 370 by a predetermined angle. In this case, the emission waveguides 330b and 332b of the optical modulation element 320b on the other side may be formed along the normal direction of the substrate end surface 370.

Furthermore, in the first and second embodiments, it is assumed to use one optical modulator (102 or 302) in which the two optical modulation elements (120a and 120b, or 320a and 320b) are formed on one sheet of substrate. However, there is no limitation thereto, and two optical modulators, which respectively comprise one optical modulation element formed on an individual substrate, may be used.

In addition, in the first and second embodiments, it is assumed to use the microlens array 106 or 306 comprising four microlenses. However, there is no limitation thereto, and individual four lenses may be used or two microlens arrays, which respectively comprise two microlenses, may be used.

In addition, in the first and second embodiments, each of the polarization beam combiners 108a and 108b comprises each of the half-wavelength plates 150a and 1510b, and each of the polarization beam combining prisms 152a and 152b, but there is no limitation thereto. For example, it is possible to employ a polarization beam combiner having an arbitrary configuration such as using of a birefringent crystal instead of the polarization beam combining prism as long as two linearly polarized light beams, which are polarized in the same direction, can be combined into one light beam.

In addition, in the first and second embodiments, as illustrated in FIG. 1 and FIG. 3, each of optical axial directions of the emission optical fibers 112a and 112b on the end surface at the side of the coupling lenses 110a and 110b, and each of optical axial directions of light beams emitted from the polarization beam combiners 108a and 108b do not match each other. However, in other embodiments, the emission optical fibers 112a and 112b may be inclined so that each of the optical axial directions of the emission optical fibers 112a 112b on the end surface matches each of the optical axial directions of the light beams emitted from the polarization beam combiners 108a and 108b without limitation to the above-described configuration.

As described above, the first and second optical modulation devices 100 and 300 are configured so that emission light beams from the two optical modulation elements (120a and 120b, or 320a and 320b) propagate in directions between which a distance gradually increases along an optical propagation direction (that is, as the light beams propagate). According to this, in the first and second optical modulation devices 100 and 300, it is possible to secure a space in which the polarization beam combiners 108a and 108b, and the lenses 160a and 110b are disposed without using an optical path shift prism, and thus the number of optical components, which are used, is reduced. As a result, it is possible to improve optical characteristics such as optical coupling efficiency, and it is possible to realize stabilization of the optical characteristics. In addition, it is possible to realize the optical modulation devices 100 and 300 in a small size and at a low cost.

### Reference Signs List

100, 300: optical modulation device
102, 302: optical modulator
104a, 104b: incident optical fiber
106, 306: microlens array
108a, 108b: polarization beam combiner
120a, 120b, 320a, 320b: optical modulation element
130a, 132a, 130b, 132b, 330a, 332a, 330b, 332b: emission waveguide
140a, 142a, 140b, 142b, 340a, 342a, 340b, 342b: microlens
150a, 150b: half-wavelength plate
152a, 152b: polarization beam combining prism
160a, 110b: coupling lens
112a, 112b: emission optical fiber
370: substrate end surface

## Claims

1. An optical modulation device comprising:
two optical modulation elements each of which outputs two linearly polarized light beams; and
four lenses which respectively receive four linearly polarized light beams output from the two optical modulation elements,
wherein a distance between the two linearly polarized light beams which are output from one of the optical modulation elements and respectively pass through two of the lenses, and the two linearly polarized light beams which are output from the other optical modulation element and respectively pass through two of the lenses is set to gradually increase along a propagation direction.

2. The optical modulation device according to claim 1,
wherein at least optical axes of the two lenses, which respectively receive the two linearly polarized light beams from one of the optical modulation elements, are displaced by a predetermined distance with respect to optical axes of said two linearly polarized light beams, and thereby the distance between the two linearly polarized light beams which are output from the one optical modulation element and respectively pass through two of the lenses, and the two linearly polarized light beams which are output from the other optical modulation element and respectively pass through two of the lenses is set to gradually increase along the propagation direction.

3. The optical modulation device according to claim 1,
wherein each of the optical modulation elements comprises an optical waveguide that is formed on a substrate, and
the optical waveguide, which emits the two linearly polarized light beams, of at least one of the optical modulation elements is formed at a predetermined angle with respect to a normal line of an end surface of the substrate so that the distance between the two linearly polarized light beams which are output from the one optical modulation element and are emitted from the end surface of the substrate, and the two linearly polarized light beams which are output from the other optical modulation element and are emitted from the end surface of the substrate gradually increase along the propagation direction.

4. The optical modulation device according to any one of claims 1 to 3,
wherein the two optical modulation elements are optical modulation elements which perform phase shift keying or quadrature amplitude modulation.

5. The optical modulation device according to any one of claims 1 to 4,
wherein the two optical modulation elements are respectively formed on different substrates, or are formed on the same substrate side by side.

6. The optical modulation device according to any one of claims 1 to 5,
wherein the four lenses comprise as a microlens array that is integrally formed.

7. The optical modulation device according to any one of claims 1 to 6, further comprising:
two polarization beam combiners which, respectively, combine the two linearly polarized light beams which are output from the one optical modulation element and respectively pass through two of the lenses into one light beam, and combine the two linearly polarized light beams which are output from the other optical modulation element and respectively pass through two of the lenses into one light beam; and
two coupling lenses which respectively couple the two light beams respectively output from the two polarization beam combiner into an optical fiber.

8. The optical modulation device according to claim 7,
wherein each of the polarization beam combiners comprises a half-wavelength plate, and a polarization beam combining prism.
